# EUROPÄISCHE PATENTSCHRIFT

(11) **EP 0 453 899 B1**
(45) Veröffentlichungstag und Bekanntmachung des Hinweises auf die Patenterteilung: **29.12.1993**
(21) Anmeldenummer: 91105830.3
(22) Anmeldetag: 12.04.1991
(51) Int. Cl.: A01N 43/653, A01N 55/00, A01N 25/02

(54) **Verwendung von Alkylcarbonsäure-dimethylamiden als Kristallisationsinhibitoren**
Use of alkyl carboxylic acid dimethyl amides for inhibiting crystallisation
Utilisation de diméthyl-amides alkylcarboxyliques comme inhibiteurs de cristallisation

(30) Priorität: 27.04.1990 DE 4013522
(43) Veröffentlichungstag der Anmeldung: 30.10.1991
(73) Patentinhaber: BAYER AG, 51368 Leverkusen (DE)
(72) Erfinder: Horstmann, Heinz-Otto, Dr., W-5060 Bergisch-Gladbach 1 (DE); Priesnitz, Uwe, Dr., W-5650 Solingen 1 (DE); Engelhardt, Ulrich, Dr., W-5090 Leverkusen (DE); Reizlein, Karl, Dr., W-5000 Koeln 80 (DE); Wangermann, Klaus, Dr., W-4150 Krefeld (DE)

(56) Entgegenhaltungen:
- EP-A- 0 095 242
- EP-A- 0 391 168
- EP-A- 0 391 171
- US-A- 3 342 673

## Beschreibung

Die vorliegende Erfindung betrifft die neue Verwendung von bestimmten Alkylcarbonsäure-dimethylamiden zur Verhinderung der Kristallisation beim Ausbringen von wäßrigen Spritzbrühen auf Basis bestimmter pestizider Wirkstoffe.

In Spritzgeräten, die üblicherweise zur Ausbringung wäßriger Formulierungen von Pflanzenbehandlungsmitteln verwendet werden, sind mehrere Filter sowie Düsen vorhanden. So befinden sich zum Beispiel Saugfilter zwischen Ansaugteil und Tankpumpe und ferner Druckfilter, welche nach der Pumpe im Druckbereich angeordnet sind. Außerdem können auch Düsenfilter enthalten sein, die sich direkt vor den Spritzdüsen befinden. Alle diese Filter sowie auch die Düsen können bei der Ausbringung von wäßrigen Spritzbrühen auf Basis fester Wirkstoffe mehr oder weniger leicht durch auskristallisierenden Wirkstoff verstopfen.

Es ist bereits bekannt, daß die nachstehend genannten Azol-Derivate fungizid wirksam sind und in Form von wäßrigen Spritzbrühen auf Pflanzen und/oder deren Lebensraum appliziert werden können:
1-(4-Chlorphenyl)-4,4-dimethyl-3-(1,2,4-triazol-1-yl-methyl)-pentan-3-ol (Tebuconazole),
1-(4-Chlorphenoxy)-3,3-dimethyl-1-(1,2,4-triazol-1-yl)-butan-2-on ( Triadimefon),
1-(4-Chlorphenoxy)-3,3-dimethyl-1-(1,2,4-triazol-1-yl)-butan-2-ol ( Triadimenol),
1-(4-Phenyl-phenoxy)-3,3-dimethyl-1-(1,2,4-triazol-1-yl)-butan-2-ol ( Bitertanol),
1-(2-Chlorphenyl)-2-(1-chlor-cycloprop-1-yl)-3-(1,2,4-triazol-1-yl)-propan-2-ol,
1-(4-Fluorphenyl)-1-(2-fluorphenyl)-2-(1,2,4-triazol-1-yl)-ethan-1-ol (Flutriafol),
1-(1,2,4-Triazol-1-yl)-2-(2,4-dichorphenyl)-hexan-2-ol (Hexaconazole),
1-[(Bis-(4-fluorphenyl)-methy silyl)-methyl]-1H-1,2,4-triazol (Flusilazole),
1-(4-Chlorphenyl)-2-(1,2,4-triazol-1-yl)-4,4-dimethyl-pent-1-en-3-ol (Uniconazole),
1-(2,4-Dichlorphenyl)-2-(1,2,4-triazol-1-yl)-4,4-dimethyl-pent-1-en-3-ol (Diniconazole),
1-(-4-Chlorphenyl)-1-(1-cyclopropyl-ethyl)-2-(1,2,4-triazol-1-yl)-ethan-1-ol (Cyproconazole) und
1-(4-Chlorphenyl)-3-phenyl-3-cyano-4-(1,2,4-triazol-1-yl)-butan (Myclobutanil).
(vgl. EP- A 0 040 345, DE-C 2 201 063, DE-C 2 324 010, EP-A 0 297 345, EP-A 0 015 756, US-A 4 551 469, EP- A 0 068 813, DE-A 2 838 847, DE-A 3 010 560, DE-A 3 406 993 und DE-A 2 821 971).

Zur Herstellung derartiger Spritzbrühen lassen sich oberflächenaktive Stoffe, wie zum Beispiel Alkylarylpolyglykolether, einsetzen. Nachteilig bei der Verwendung dieser herkömmlichen Formulierungen ist aber, daß die Wirkstoffe häufig zur Kristallisation neigen und sowohl Filter als auch Düsen der Spritzgeräte verstopfen können.

Aus der EP-A 0 095 242 ist bekannt, daß sich Formulierungen, die pestizid wirksame Stoffe, wie zum Beispiel bestimmte Azol-Derivate, eine organische Säure und ein polares Solvens enthalten, mit Wasser verdünnen und durch Spritzapplikation verwenden lassen. Der Einsatz von Alkylcarbonsäure-dimethylamiden oder anderen Substanzen zur Verhinderung von Kristallbildung wird nicht erwähnt.

Weiterhin geht aus der US-A 3 342 673 hervor, daß Alkylcarbonsäureamide zur Herstellung stabiler Formulierungen von Carbamaten geeignet sind. Entsprechende Zubereitungen von Azolen werden aber nicht offenbart.

Es wurde nun gefunden, daß sich Alkylcarbonsäure-dimethylamide der Formel 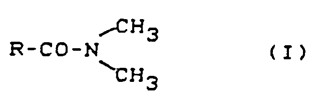
in welcher
- R: für Alkyl mit 5 bis 19 Kohlenstoffatomen steht,

beim Ausbringen von wäßrigen Spritzbrühen, die
A) mindestens ein Azol-Derivat der Formel 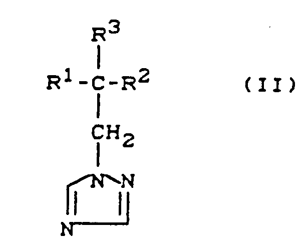 in welcher
   a)
      - R¹: für 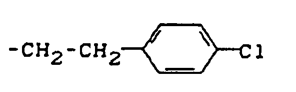
      - R²: für tert.-Butyl steht und
      - R³: für Hydroxy steht,
      oder
   b)
      - R¹: für 4-Fluorphenyl steht,
      - R²: für 2-Fluorphenyl steht und
      - R³: für Hydroxy steht,
      oder
   c)
      - R¹: für 2,4-Dichlorphenyl steht,
      - R²: für n-Butyl steht und
      - R³: für Hydroxy steht,
      oder
   d)
      - R¹: für 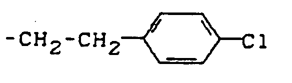 steht,
      - R²: für Phenyl steht und
      - R³: für Cyano steht,
      oder
   e)
      - R¹: für 2-Chlor-benzyl steht,
      - R²: für 1-Chlor-cycloprop-1-yl steht
      und
      - R³: für Hydroxy steht,
      oder
   f)
      - R¹: für 4-Chlorphenyl steht,
      - R²: für 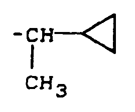 steht und
      - R³: für Hydroxy steht,
      und/oder
      mindestens ein Azol-Derivat der Formel 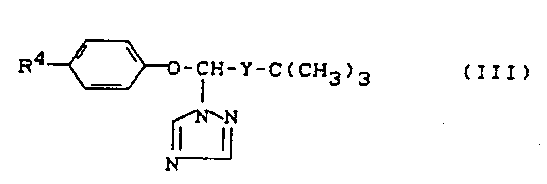 in welcher

   a)
      - Y: für -CH(OH) steht und
      - R⁴: für Chlor oder Phenyl steht,
      oder
   b)
      - Y: für CO steht und
      - R⁴: für Chlor steht,
      und/oder
      mindestens ein Azol-Derivat der Formel 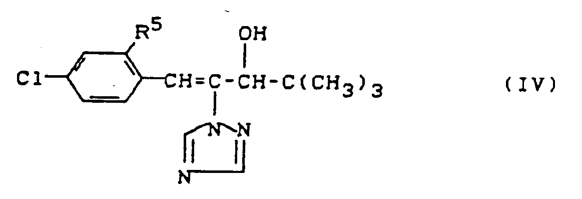 in welcher
      - R⁵: für Wasserstoff oder Chlor steht,
      und/oder
      1-[(Bis-(4-fluorphenyl)-methylsilyl)-methyl]-1H-1,2,4-triazol der Formel 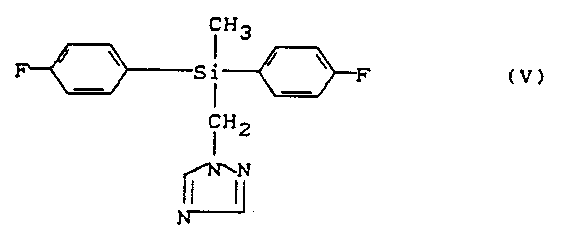 und
B) gegebenenfalls einen oder mehrere weitere Wirkstoffe sowie Zusatzstoffe

enthalten, zur Verhinderung der Kristallisation von Wirkstoffen der Formeln (II) bis (V) verwenden lassen.

Es ist als äußerst überraschend zu bezeichnen, daß die Kristallisationsneigung von Azol-Derivaten der Formeln (II) bis (V) durch die erfindungsgemäße Verwendung von Alkylcarbonsäure-dimethylamiden der Formel (I) stark herabgesetzt wird. Vor allem war nicht zu erwarten, daß Alkylcarbonsäuredimethylamide der Formel (I) wesentlich besser als andere vergleichbar wirkende Stoffe für den angegebenen Zweck geeignet sind.

Die Verwendung von Alkylcarbonsäure-dimethylamiden der Formel (I) in wäßrigen und nicht-wäßrigen Formulierungen auf Basis von fungizid wirksamen Azol-Derivaten der Formeln (II) bis (V) weist eine Reihe von Vorteilen auf. So handelt es sich bei den Alkylcarbonsäure-dimethylamiden um Stoffe, die problemlos zu handhaben und auch in größeren Mengen verfügbar sind. Ferner wird durch den Einsatz der Stoffe der Formel (I) verhindert, daß beim Versprühen von wäßrigen Formulierungen, die Wirkstoffe der Formeln (II) bis (V) enthalten, sowohl die Filter als auch die Düsen der Spritzgeräte verstopfen. Vorteilhaft ist auch, daß Alkylcarbonsäure-dimethylamide der Formel (I) im Pflanzenschutz keinerlei unerwünschte Nebenwirkungen ausüben.

Die erfindungsgemäß verwendbaren Alkylcarbonsäure-dimethylamide sind durch die Formel (I) definiert. R steht für geradkettiges oder verzweigtes Alkyl mit 5 bis 19 Kohlenstoffatomen, vorzugsweise mit 5 bis 11 Kohlenstoffatomen. Die Stoffe können sowohl einzeln als auch in Form von Gemischen verwendet werden. Besonders bevorzugt verwendbar ist das unter dem Handelsnamen Hallcomid bekannte Gemisch, das durchschnittlich zu 5 % aus Hexancarbonsäuredimethylamid, 50 % Octancarbonsäure-dimethylamid, 40 % Decancarbonsäure-dimethylamid und zu 5 % aus Dodecancarbonsäure-dimethylamid besteht.

Die Alkylcarbonsäure-dimethylamide der Formel (I) sind bereits bekannt.

Die in den erfindungsgemäß verwendbaren wäßrigen Spritzbrühen enthaltenen Azolderivate sind durch die Formeln (II) bis (V) definiert. Es können einzelne oder auch mehrere der folgenden Azol-Derivate enthalten sein.

1-(4-Chlorphenyl)-4,4-dimethyl-3-(1,2,4-triazol-1-yl-methyl)-pentan-3-ol der Formel 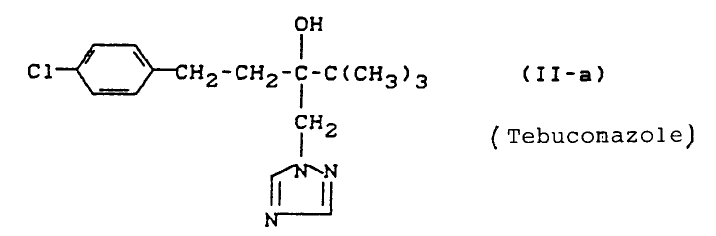
1-(4-Fluorphenyl)-1-(2-fluorphenyl)-2-(1,2,4-triazol-1-yl)-ethan-1-ol der Formel 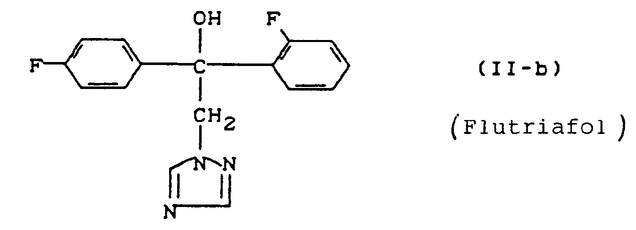
1-(1,2,4-Triazol-1-yl)-2-(2,4-dichlorphenyl)-hexan-2-ol der Formel 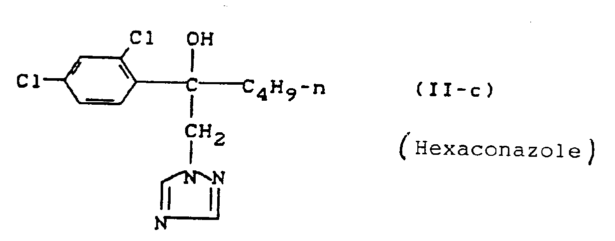
1-(4-Chlorphenyl )-3-phenyl-3-cyano-4-(1,2,4-triazol-1-yl)-butan der Formel 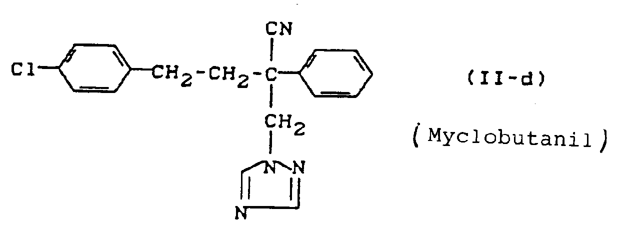
1-(2-Chlorphenyl)-2-(1-chlor-cycloprop-1-yl)-3-(1,2,4-triazol-1-yl)-propan-2-ol der Formel 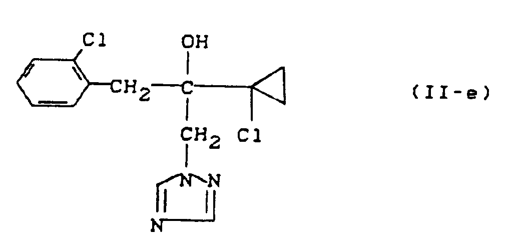
1-(4-Chlorphenyl)-1-(1-cyclopropyl-ethyl)-2-(1,2,4-triazol-1-yl)-ethan-1-ol der Formel 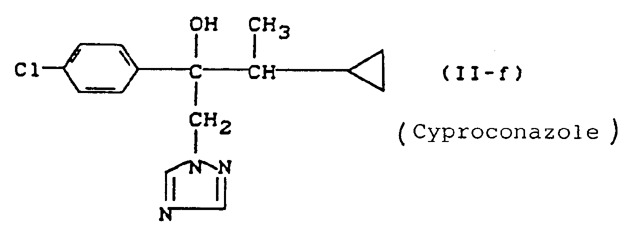
1-(4-Chlorphenoxy)-3,3-dimethy1-1-(1,2,4-triazol-1-yl)-butan-2-ol der Formel 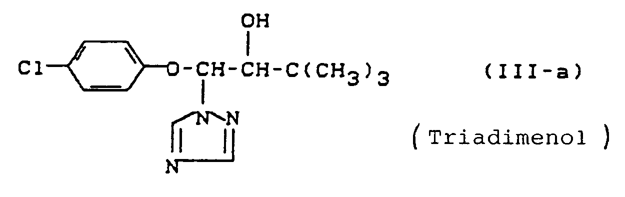
1-(4-Phenyl-phenoxy)-3,3-dimethyl-1-(1,2,4-triatol-1-yl)-butan-2-ol der Formel 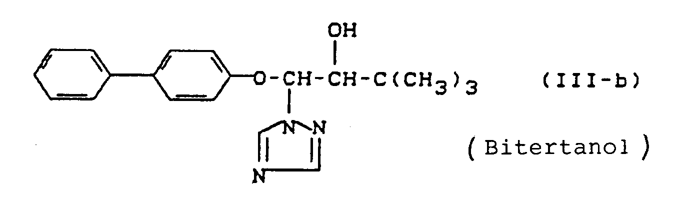
1-(4-Chlorphenoxy)-3,3-dimethyl-1-(1,2,4-triatol-1-yl)-butan-2-on der Formel 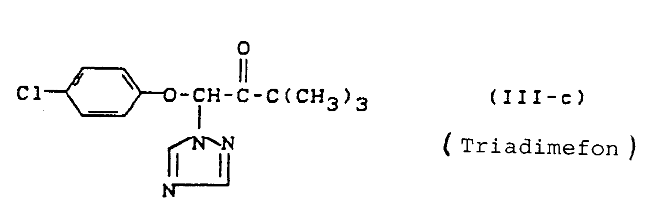
1-(4-Chlorphenyl)-2-(1,2,4-triazol-1-yl)-4,4-dimethyl-pent-1-en-3-ol der Formel 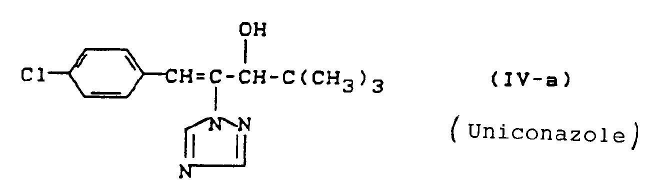
1-(2,4-Dichlorphenyl)-2-(1,2,4-triazol-1-yl)-4,4-dimethyl-pent-1-en-3-ol der Formel 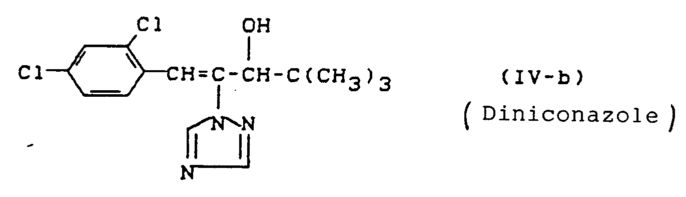
1-[(Bis-(4-fluorphenyl)-methylsilyl)-methyl]-1H-1,2,4-triazol der Formel

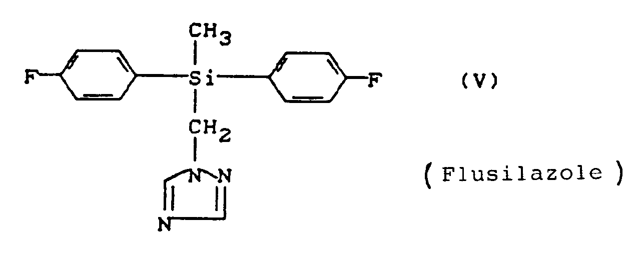

Die Wirkstoffe der Formeln (II) bis (V) sowie deren Verwendung zur Bekämpfung phytopathogener Pilze sind bekannt (vgl. EP-A 0 040 345, US-A 4 551 469, EP-B 0 015 756, EP-A 0 068 813, EP-A 0 297 345, DE-A 3 406 993, DE-C 2 324 010, DE-C 2 201 063, DE-A 2 838 847, DE-A 3 010 560 und DE-A 2 821 971).

Die Wirkstoffe der Formeln (II) bis (V) lassen sich in üblichen Formulierungen einsetzen. Vorzugsweise erfolgt die Ausbringung in Form von wäßrigen Spritzbrühen.

In den erfindungsgemäß verwendbaren Spritzbrühen können neben den Wirkstoffen der Formeln (II) bis (V) auch einer oder mehrere weitere Wirkstoffe enthalten sein. Vorzugsweise in Frage kommen dabei Verbindungen mit fungiziden Eigenschaften. Als Beispiele für derartige zusätzlich verwendbare Wirkstoffe seien genannt:
N,N-Dimethyl-N'-phenyl-(N'-fluordichlormethylthio)-sulfamid (Dichlofluanid),
N,N-Dimethyl-(N'-fluordichlormethylthio)-N'-(4-methylphenyl)-sulfamid (Tolylfluanid),
N-Trichlormethylmercapto-4-cyclohexen-1,2-di arboxamid (Captan),
N-(1,1,2,2-Tetrachlorethyl-sulfenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil),
4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
N-Dodecyl-2,6-dimethyl-morpholin (Aldimorph)
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),
1,2-Dimethyl-cyclopropan-1,2-dicarbonsäure-3,5-dichlorphenylimid (Procymidone),
2-Methoxycarbamoyl-benzimidazol (Carbendazim),
1-(Butylcarbamoyl)-2-benzimidazolmethylcarbamat (Benomyl),
2,4-Dichlor-6-(2'-chlorphenyl-amino)-1,3,4-triazin (Anilazine),
Bis-(8-Guanidin-O-octyl)-amin-triacetat (Guazatine),
1-(4-Chlorbenzyl)-1-cyclopentyl-3-phenyl-harnstoff (Pencycuron).

Als Zusatzstoffe, die in den erfindungsgemäß verwendbaren Spritzbrühen vorhanden sein können, kommen oberflächenaktive Stoffe, organische Verdünnungsmittel, Wasser, Säuren, Kältestabilisatoren und Haftmittel in Frage.

Dabei kommen als oberflächenaktive Stoffe nichtionogene und anionische Emulgatoren, wie Polyoxyethylen-Fettsäure-Ester, Polyoxyethylen-Fettalkohol-Ether, Alkylaryl-polyglykol-Ether, Alkylsulfonate, Alkylarylsulfonate, Alkylsulfate und Arylsulfonate in Betracht. Die Emulgatoren können einzeln oder auch in Mischung eingesetzt werden. Vorzugsweise genannt seien
Polyoxyethylen-Sorbitan-Monolaurat mit durchschnittlich 20 Oxyethylen-Einheiten pro Molekül,
Polyoxyethylen-Sorbitan-Monopalmitat mit durchschnittlich 20 Oxyethylen-Einheiten pro Molekül,
Polyoxyethylen-Sorbitan-Monostearat mit durchschnittlich 20 Oxyethylen-Einheiten pro Molekül,
Sorbitan-Monolaurat,
Sorbitan-Monopalmitat,
Sorbitan-Monostearat,
Polyoxyethylen-oleylether mit durchschnittlich 10 Oxyethylen-Einheiten pro Molekül,
Polyoxyethylen-oleylether mit durchschnittlich 20 Oxyethylen-Einheiten pro Molekül,
Bis-[α-methyl-(4-methyl-benzyl)]-phenyl-polyglykolether mit durchschnittlich 27 Oxyethylen-Einheiten pro Molekül,
Bis-[α-methyl-(4-n-dodecyl)]-phenyl-polyglykolether mit durchschnittlich 27 Oxyethylen-Einheiten pro Molekül,
Bis-(4-methyl-Benzyl)-phenyl-polyglykolether mit durchschnittlich 27 Oxyethylen-Einheiten pro Molekül,
Bis-(4-n-dodecyl-benzyl)-phenyl-polyglykolether mit durchschnittlich 27 Oxyethylen-Einheiten pro Molekül,
Tris-[α-methyl-(4-methyl-benzyl)]-phenyl-polyglykolether mit durchschnittlich 17 Oxyethylen-Einheiten pro Molekül,
Bis-(α-methyl-benzyl)-phenyl-polyglykolether mit durchschnittlich 17 Oxyethylen-Einheiten pro Molekül,
Tris-(α-methyl-benzyl)-phenyl-polyglykolether mit durchschnittlich 17 Oxyethylen-Einheiten pro Molekül,
Bis-(α-methyl-benzyl)-phenyl-polyglykolether mit durchschnittlich 27 Oxyethylen-Einheiten pro Molekül,
Tris-(α-methyl-benzyI)-phenyl-polyglykolether mit durchschnittlich 27 Oxyethylen-Einheiten pro Molekül,
Bis-(α-methyl-benzyl)-phenyl-polyglykolether mit durchschnittlich 3 Oxyethylen-Einheiten pro Molekül,
Tris-(α-methyl-benzyl)-phenyl-polyglykolether mit durchschnittlich 3 Oxyethylen-Einheiten pro Molekül,
Nonylphenol-polyglykolether mit durchschnittlich 15 Oxyethylen-Einheiten pro Molekül,
Nonylphenol-diglykolether mit durchschnittlich 2 Oxyethylen-Einheiten pro Molekül,
n-Dodecyl-Natriumsulfonat,
Natrium-laurylsulfat,
4-(n-Nonyl)-phenyl-sulfonsäure-Natriumsalz,
4-(Tetrapropylen)-phenyl-sulfonsäure-Natriumsalz,
4-(i-Dodecyl)-phenyl-sulfonsäure-Ammoniumsalz,
4-(i-Dodecyl)-phenyl-sulfonsäure-Calciumsalz,
4-(n-Dodecyl)-phenyl-sulfonsäure-(2-hydroxyethyl)-ammoniumsalz,
4-(n-Dodecyl)-phenyl-sulfonsäure-bis-(2-hydroxyethyl)-ammoniumsalz,
4-(n-Dodecyl)-phenyl-sulfonsäure-tris-(2-hydroxyethyl)-ammoniumsalz,
4-(n-Dodecyl)-phenyl-sulfonsäure-Calciumsalz.

Die in der Praxis verwendeten Emulgatoren aus der Gruppe der Alkylaryl-polyglykol-Ether sind im allgemeinen Gemische aus mehreren Verbindungen, insbesondere handelt es sich hierbei um Gemische aus Stoffen, die sich durch den Substitutionsgrad an dem mit der Oxyethylen-Einheit verbundenen Phenylring und die Zahl der Oxyethylen-Einheiten unterscheiden, Dadurch errechnen sich für die Zahl der Substituenten am Phenylring auch gebrochene Zahlen als Mittelwerte. Beispielsweise erwähnt seien Substanzen, für die sich folgende durchschnittliche Zusammensetzungen ergeben:

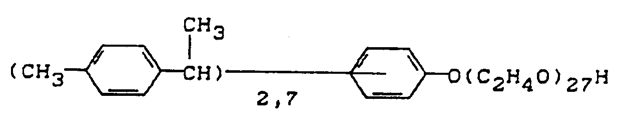

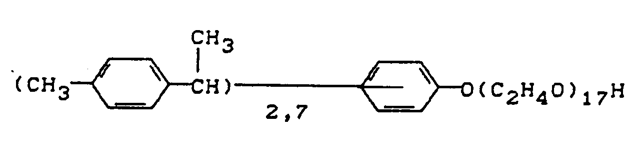

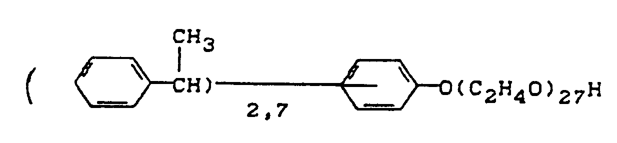

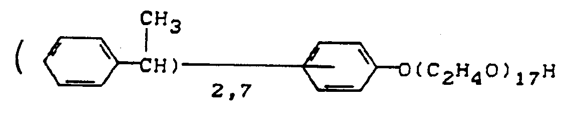

Als organische Verdünnungsmittel können in den erfindungsgemäß verwendbaren Spritzbrühen alle üblicherweise für derartige Zwecke einsetzbaren polaren und unpolaren organischen Solventien vorhanden sein. Vorzugsweise in Betracht kommen Ketone, wie Methyl-isobutyl-keton und Cyclohexanon, ferner Amide, wie Dimethylformamid weiterhin cyclische Verbindungen, wie N-Methyl-pyrrolidon, N-Octyl-pyrrolidon, N-Dodecyl-pyrrolidon, N-Dodecyl-caprolactam und Butyrolacton, darüberhinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäurehexylester, Essigsäure-heptylester, Zitronensäure-tri-n-butylester und Phthalsäure-di-n-butylester, und weiterhin Alkohole, wie Ethanol, n- und i-Propanol, n-und i-Butanol, n- und i-Amylalkohol, Benzylalkohol und 1-Methoxy-2-propanol.

In den erfindungsgemäß verwendbaren Spritzbrühen kann auch vor dem Verdünnen Wasser enthalten sein.

Als Säuren können in den erfindungsgemäß verwendbaren Spritzbrühen alle üblicherweise für derartige Zwecke einsetzbaren anorganischen und organischen Säuren vorhandsen sein. Vorzugsweise in Frage kommen aliphatische und aromatische Hydroxycarbonsäuren, wie Citronensäure, Salicylsäure, Weinsäure und Ascorbinsäure, sowie anorganische Säuren,wie Phosphorsäure.
Als Kältestabilisatoren können in den erfindungsgemäß verwendbaren Spritzbrühen alle üblicherweise für diesen Zweck geeigneten Stoffe enthalten sein. Vorzugsweise in Frage kommen Harnstoff, Glycerin und Propylenglykol.

Als Haftmittel können in den erfindungsgemäß verwendbaren Spritzbrühen alle üblicherweise für diesen Zweck geeigneten Stoffe eingesetzt werden. Vorzugsweise in Betracht kommen Haftmittel wie Carboxymethylcellulose, natürliche und synthetische pulverige, körnige oder latexförmige Polymere, wie Gummi arabicum, Polyvinylalkohol, Polyvinylacetat, sowie natürliche Phospholipide, wie Kephaline und Lecithine, und auch synthetische Phospholipide. Weitere Additive können mineralische und vegetabile Öle sein.

Im übrigen ist in den erfindungsgemäß verwendbaren Spritzbrühen jeweils Wasser enthalten.

Die Wirkstoffkonzentrationen können in den erfindungsgemäß verwendbaren Spritzbrühen innerhalb eines bestimmten Bereiches variiert werden. Im allgemeinen liegen die Wirkstoffkonzentrationen zwischen 0,0001 und 3 Gewichtsprozent, vorzugsweise zwischen 0,001 und 2-Gewichtsprozent.

Auch das Verhältnis von Wirkstoff der Formeln (II) bis (V) zu Alkylcarbonsäure-dimethylamid der Formel (I) kann innerhalb eines bestimmten Bereiches variiert werden. Im allgemeinen liegt das Gewichtsverhältnis von Wirkstoff aus der Gruppe (A) zu Alkylcarbonsäure-dimethylamid der Formel (I) zwischen 1:0,2 und 1:5, vorzugsweise zwischen 1:0,6 und 1:2.

Die Mengen an weiteren Wirkstoffen bzw. Zusatzstoffen können in den erfindungsgemäß verwendbaren Spritzbrühen innerhalb eines größeren Bereiches variiert werden. Sie liegen in der Größenordnung wie es üblicherweise in derartigen wäßrigen Spritzbrühen der Fall ist.

Die Herstellung der erfindungsgemäß verwendbaren Spritzbrühen erfolgt nach üblichen Methoden. Im allgemeinen geht man so vor, daß man zunächst ein Konzentrat herstellt, indem man bei Temperaturen zwischen 10 und 30°C die benötigten Komponenten in beliebiger Reihenfolge zusammengibt und homogen vermischt und das entstehende Gemisch gegebenenfalls filtriert. Zur Herstellung der anwendungsfertigen Spritzbrühen wird die konzentrierte Formulierung gegebenenfalls unter Rühren und/oder Pumpen mit der jeweils gewünschten Menge an Wasser so vermischt, daß die Formulierung in Wasser gleichmäßig und feindispers verteilt wird.

Es ist auch möglich, Alkylcarbonsäure-dimethylamid der Formel (I) dann hinzuzugeben, wenn das Konzentrat mit Wasser zur anwendungsfertigen Spritzbrühe verdünnt wird.

Sowohl zur Zubereitung der konzentrierten Formulierungen als auch zur Herstellung und Ausbringung der erfindungsgemäß verwendbaren Spritzbrühen lassen sich alle üblicherweise für diese Zwecke geeigneten Mischapparate und Spritzgeräte einsetzen.

Durch die Verwendung von Alkylcarbonsäure-dimethylamiden der Formel (I) in wäßrigen Spritzbrühen auf Basis von Wirkstoffen der Formeln (II) bis (V) wird die Auskristallisation von Wirkstoff sowohl in der konzentrierten, handelsüblichen Formulierung als auch beim Ausbringen der daraus hergestellten wäßrigen Spritzbrühen in den Filtern und Austrittsöffnungen der Spritzgeräte entweder ganz unterbunden oder soweit verhindert, daß die Ausbringung der Spritzbrühen nicht beeinträchtigt ist.

Die Herstellung und das Kristallisationsverhalten der erfindungsgemäß verwendbaren Spritzbrühen werden durch die folgenden Beispiele veranschaulicht.

### Herstellungsbeispiele

### Beispiel 1

Zur Herstellung einer Formulierung werden
25,4 Gew.-Teile 1-(4-Chlorphenyl)-4,4-dimethy1-3-(1,2,4-triazol-1-yl-methyl)-pentan-3-ol der Formel 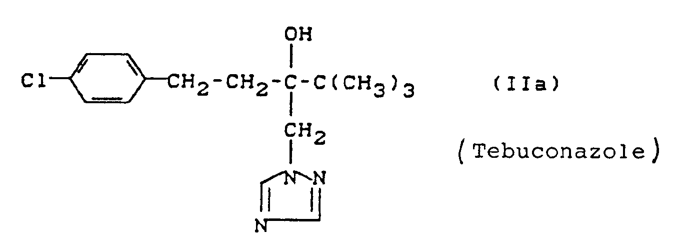
49,1 Gew.-Teile eines Gemisches aus durchschnittlich
- 5: % Hexancarbonsäure-dimethylamid,
- 50: % Octancarbonsäure-dimethylamid,
- 40: % Decancarbonsäure-dimethylamid und
- 5: % Dodecancarbonsäure-dimethylamid,

20,0 Gew.-Teile des Emulgators der durchschnittlichen Zusammensetzung der Formel 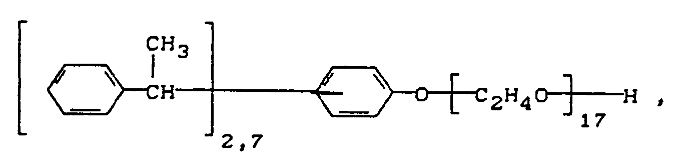
- 5,0: Gew.-Teile N-Methyl-pyrrolidon und
- 0,5: Gew.-Teile Wasser

bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 2

Zur Herstellung einer Formulierung werden
25,0 Gew.-Teile 1-(4-Chlorphenyl)-4,4-dimethyl-3-(1,2,4-triazol-1-yl-methyl)-pentan-3-ol der Formel 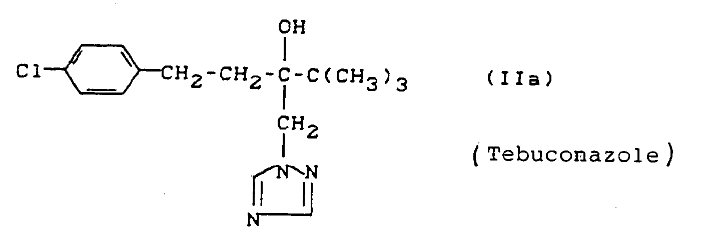
35,0 Gew.-Teile eines Gemisches aus durchschnittlich
- 5: % Hexancarbonsäure-dimethylamid,
- 50: % Octancarbonsäure-dimethylamid,
- 40: % Decancarbonsäure-dimethylamid und
- 5: % Dodecancarbonsäure-dimethylamid,

6,5 Gew.-Teile des Emulgators der durchschnittlichen Zusammensetzung der Formel 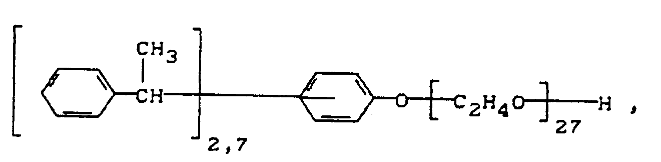
- 10,0: Gew.-Teile N-Octyl -pyrrolidon und
- 6,5: Gew.-Teile 4-(n-Dodecyl)-phenyl-sulfonsäure-(2-hydroxyethyl)-ammoniumsalz und
- 17,0: Gew.-Teile Wasser

bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 3

Zur Herstellung einer Formulierung werden
24,2 Gew.-Teile 1-(4-Chlorphenyl)-4,4-dimethyl-3-(1,2,4-triazol-1-yl-methyl)-pentan-3-ol der Formel 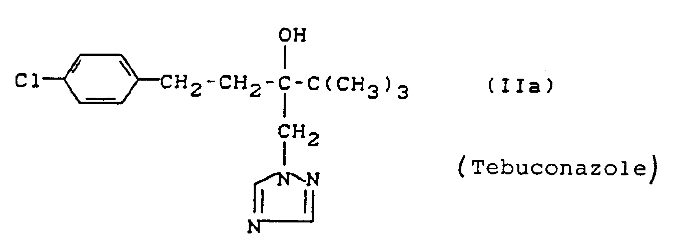
12,1 Gew.-Teile 1-(4-Chlorphenoxy)-3,3-dimethyl-1-(1,2,4-triazol-1-yl)-butan-2-ol der Formel 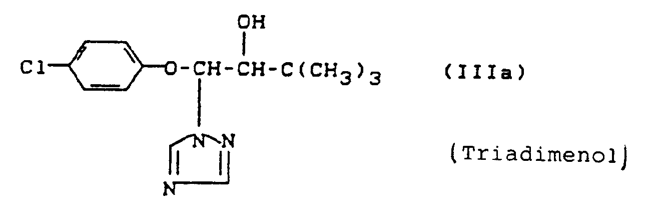
35,0 Gew.-Teile eines Gemisches aus durchschnittlich
- 5: % Hexancarbonsäure-dimethylamid,
- 50: % Octancarbonsäure-dimethylamid,
- 40: % Decancarbonsäure-dimethylamid und
- 5: % Dodecancarbonsäure-dimethylamid,

20,0 Gew.-Teile des Emulgators der durchschnittlichen Zusammensetzung der Formel 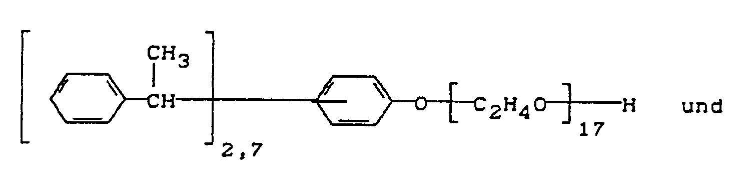
8,7 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 4

Zur Herstellung einer Formulierung werden
23,8 Gew.-Teile 1-(4-Chlorphenyl)-4,4-dimethyl-3-(1,2,4-triazol-1-yl-methyl)-pentan-3-ol der Formel 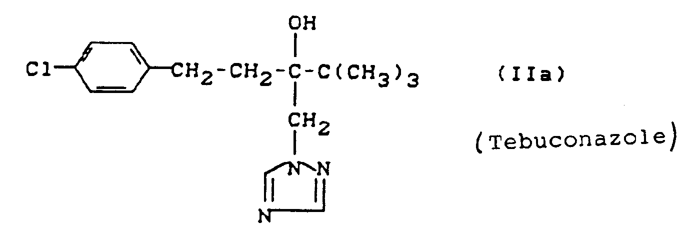
11,9 Gew.-Teile 1-(4-Chlorphenoxy)-3,3-dimethyl-1-(1,2,4-triazol-1-yl)-butan-2-ol der Formel 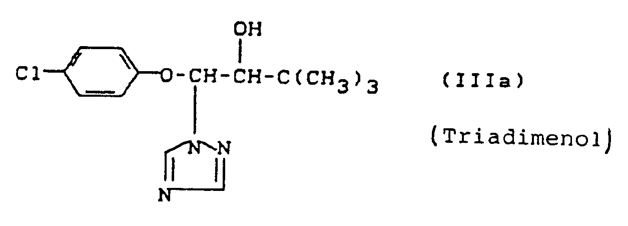
15,0 Gew.-Teile eines Gemisches aus durchschnittlich
- 5: % Hexancarbonsäure-dimethylamid,
- 50: % Octancarbonsäure-dimethylamid,
- 40: % Decancarbonsäure-dimethylamid und
- 5: % Dodecancarbonsäure-dimethylamid,

12,0 Gew.-Teile N-Octyl-pyrrolidon,
4,0 Gew.-Teile des Emulgators der durchschnittlichen Zusammensetzung der Formel 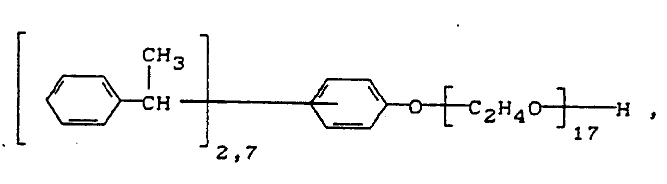
4,0 Gew.-Teile 4-(n-Dodecyl)-phenyl-sulfonsäure-(2-hydroxyethyl)-ammoniumsalz,
4,0 Gew.-Teile des Emulgators der durchschnittlichen Zusammensetzung der Formel 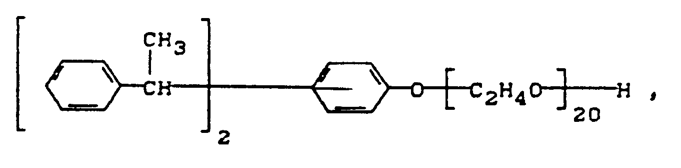
8,0 Gew.-Teile eines Emulgators, der durch Umsetzung von 1 Mol eines verzweigten Dodecanols mit 15 Mol Ethylenoxid erhalten wird, und
17,3 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 5

Zur Herstellung einer Formulierung werden
25,0 Gew.-Teile 1-(4-Chlorphenyl)-4,4-dimethy1-3-(1,2,4-triazol-1-yl-methyl)-pentan-3-ol der Formel 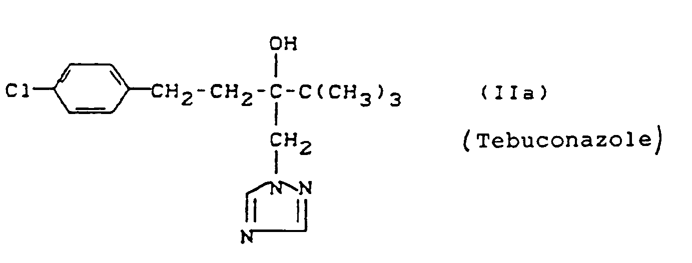
35,0 Gew.-Teile eines Gemisches aus durchschnittlich
- 5: % Hexancarbonsäure-dimethylamid,
- 50: % Octancarbonsäure-dimethylamid,
- 40: % Decancarbonsäure-dimethylamid und
- 5: % Dodecancarbonsäure-dimethylamid,

6,5 Gew.-Teile des Emulgators der durchschnittlichen Zusammensetzung der Formel 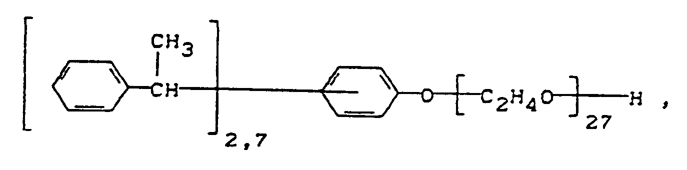
- 10,0: Gew.-Teile N-Octyl-pyrrolidon,
- 6,5: Gew.-Teile 4-(n-Dodecyl)-phenyl-sulfonsäure-(2-hydroxyethyl)-ammoniumsalz,
- 5,0: Gew.-Teile N-Methyl-pyrrolidon und
- 12,0: Gew.-Teile Wasser

bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Vergleichsbeispiel A

Zur Herstellung einer Formulierung werden
12,5 Gew.-Teile 1-(4-Chlorphenyl)-4,4-dimethyl-3-(1,2,4-triazol-1-yl-methyl)-pentan-3-ol der Formel 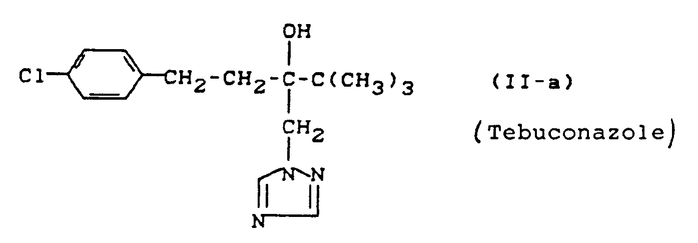
6,5 Gew.-Teile des Emulgators der durchschnittlichen Zusammensetzung der Formel 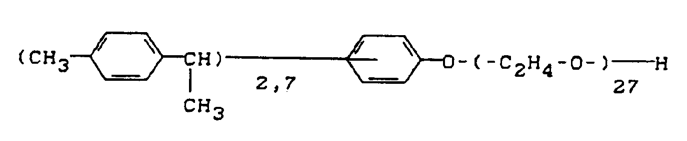
- 6,5: Gew.-Teile 4-(n-Dodecyl)-phenylsulfonsäure-(2-hydroxyethyl)-ammoniumsalz,
- 35,0: Gew.-Teile Cyclohexanon und
- 39,5: Gew.-Teile Wasser

bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Verwendungsbeispiel I

Zur Prüfung der Kristallisationseigenschaften werden jeweils 250 ml einer wäßrigen Spritzbrühe, die einen Konzentratgehalt von 0,5 Gew.-% aufweist, in einer Durchflußapparatur mit Hilfe einer Pumpe 15 Minuten lang durch ein feinmaschiges Sieb umgepumpt. Nach achtmaliger Wiederholung dieses Vorganges mit jeweils 250 ml frisch eingesetzter Spritzbrühe wird die Kristallabscheidung an dem Sieb photographiert.

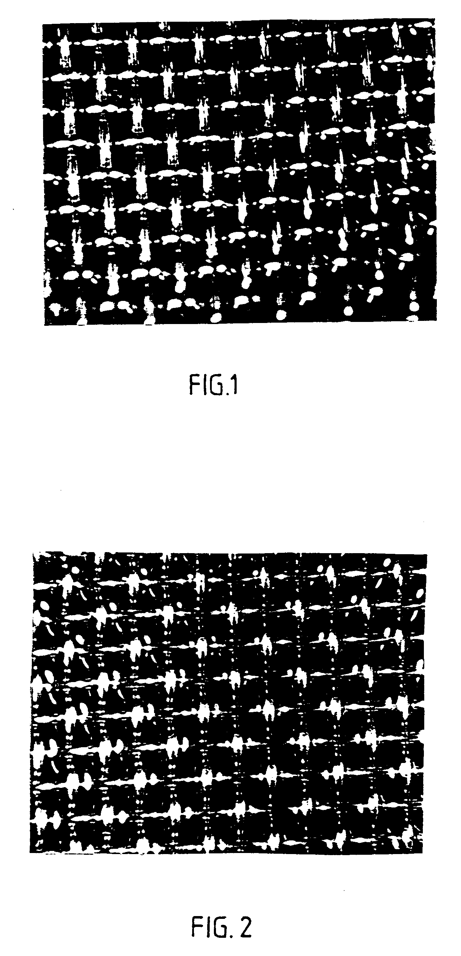

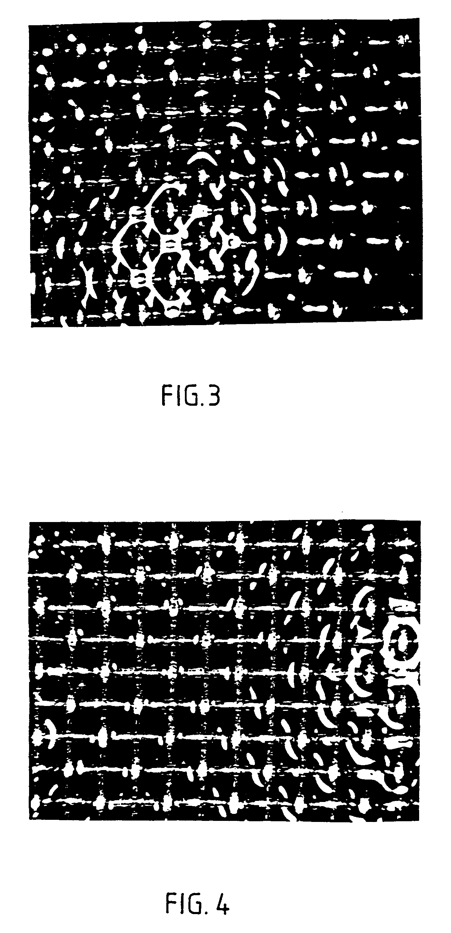

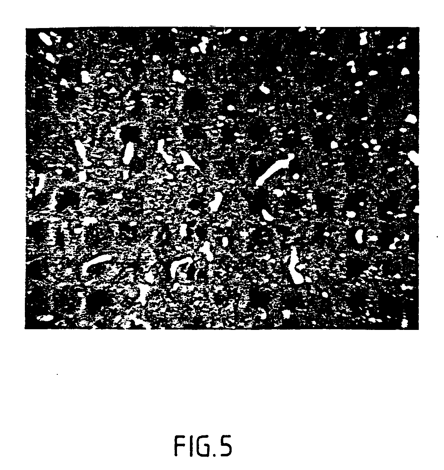

Die entsprechenden Photographien sind in den Abbildungen 1 bis 5 (Fig. 1 bis 5) wiedergegeben.

Fig. 1 zeigt in 25-facher Vergrößerung die Kristallabscheidung, die beim Durchpumpen von acht 250 ml Ansätzen der Spritzbrühe gemäß Beispiel (1) am Sieb entsteht.

Fig. 2 zeigt in 25-facher Vergrößerung die Kristallabscheidung, die beim Durchpumpen von acht 250 ml Ansätzen der Spritzbrühe gemäß Beispiel (2) am Sieb entsteht.

Fig. 3 zeigt in 25-facher Vergrößerung die Kristallabscheidung, die beim Durchpumpen von acht 250 ml Ansätzen der Spritzbrühe gemäß Beispiel (3) am Sieb entsteht.

Fig. 4 zeigt in 25-facher Vergrößerung die Kristallabscheidung, die beim Durchpumpen von acht 250 ml Ansätzen der Spritzbrühe gemäß Beispiel (4) am Sieb entsteht.

Fig. 5 zeigt in 25-facher Vergrößerung die Kristallabscheidung, die beim Durchpumpen von acht 250 ml Ansätzen der Spritzbrühe gemäß Beispiel (A) am Sieb entsteht.

Aus den Abbildungen ist erkennbar, daß das Sieb im Falle der bekannten Spritzbrühe gemäß Beispiel (A) teilweise verstopft, während im Falle der Spritzbrühen gemäß Beispielen (1) bis (4) keine Kristallabscheidung beobachtet wird.

## Patentansprüche

1. Verwendung von Alkylcarbonsäure-dimethylamiden der Formel 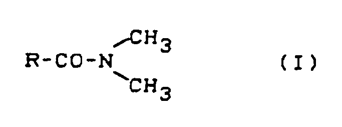 in welcher
R für Alkyl mit 5 bis 19 Kohlenstoffatomen steht,
beim Ausbringen von wäßrigen Spritzbrühen, die
A) mindestens ein Azol-Derivat der Formel 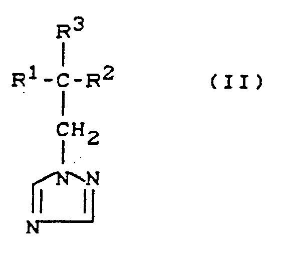 in welcher
a)
R¹ für 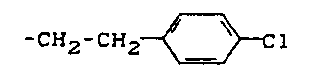
R² für tert.-Butyl steht und
R³ für Hydroxy steht,
oder
b)
R¹ für 4-Fluorphenyl steht,
R² für 2-Fluorphenyl steht und
R³ für Hydroxy steht,
oder
c)
R¹ für 2,4-Dichlorphenyl steht,
R² für n-Butyl steht und
R³ für Hydroxy steht,
oder
d)
R¹ für 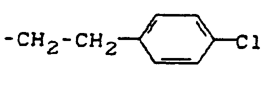 steht,
R² für Phenyl steht und
R³ für Cyano steht,
oder
e)
R¹ für 2-Chlor-benzyl steht,
R² für 1-Chlor-cycloprop-1-yl steht und
R³ für Hydroxy steht,
oder
f)
R¹ für 4-Chlorphenyl steht,
R² für 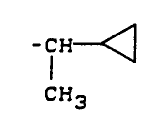 steht und
R³ für Hydroxy steht,
und/oder
mindestens ein Azol-Derivat der Formel 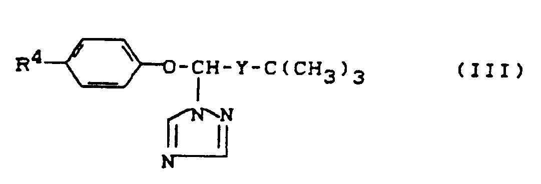 in welcher
a)
Y für -CH(OH) steht und
R⁴ für Chlor oder Phenyl steht,
oder
b)
Y für CO steht und
R⁴ für Chlor steht,
und/oder
mindestens ein Azol-Derivat der Formel 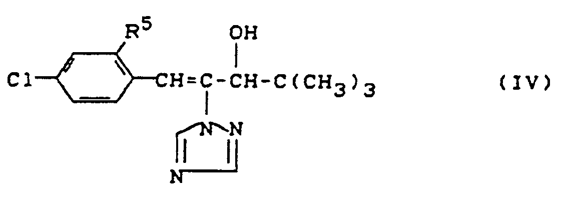 in welcher
R⁵ für Wasserstoff oder Chlor steht,
und/oder
1-[(Bis-(4-fluorphenyl)-methylsilyl)-methyl]-1H-1,2,4-triazol der Formel 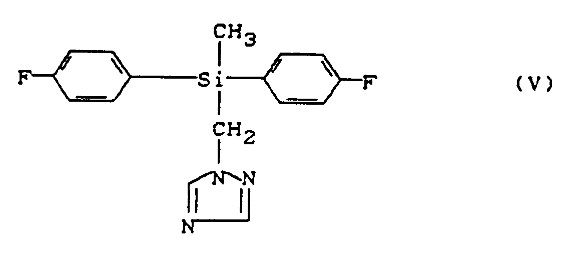 und
B) gegebenenfalls einen oder mehrere weitere Wirkstoffe sowie Zusatzstoffe
enthalten, zur Verhinderung der Kristallisation von Wirkstoffen der Formeln (II) bis (V).

2. Verwendung gemäß Anspruch 1, dadurch gekennzeichnet, daß man ein Alkylcarbonsäure-dimethylamid-Gemisch einsetzt, das zu durchschnittlich
5 % aus Hexancarbonsäure-dimethylamid,
50 % aus Octancarbonsäure-dimethylamid,
40 % aus Decancarbonsäure-dimethylamid und
5 % aus Dodecancarbonsäure-dimethylamid besteht.

3. Verfahren zur Verhinderung der Kristallisation von Wirkstoffen der Formeln (II) bis (V) gemäß Anspruch 1 beim Ausbringen von wäßrigen Spritzbrühen, die mindestens einen Wirkstoff der Formeln (II) bis (V) enthalten, dadurch gekennzeichnet, daß man den Spritzbrühen mindestens ein Alkylcarbonsäure-dimethylamid der Formel (I) gemäß Anspruch 1 zusetzt.

## Claims

1. Use of alkylcarboxylic acid dimethylamides of the formula 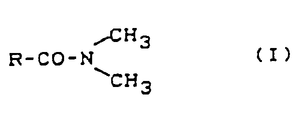 in which
R represents alkyl having 5 to 19 carbon atoms,
during application of aqueous spray liquors which contain
A) at least one azole derivative of the formula 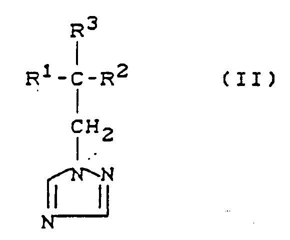 in which
a)
R¹ represents 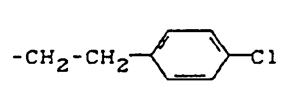
R² represents tert.-butyl and
R³ represents hydroxyl,
or
b)
R¹ represents 4-fluorophenyl,
R² represents 2-fluorophenyl and
R³ represents hydroxyl,
or
c)
R¹ represents 2,4-dichlorophenyl,
R² represents n-butyl and
R³ represents hydroxyl,
or
d)
R¹ represents 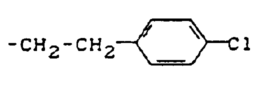
R² represents phenyl and
R³ represents cyano,
or
e)
R¹ represents 2-chloro-benzyl,
R² represents 1-chloro-cycloprop-1-yl and
R³ represents hydroxyl,
or
f)
R¹ represents 4-chlorophenyl,
R² represents 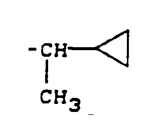 and
R³ represents hydroxyl,
and/or
at least one azole derivative of the formula 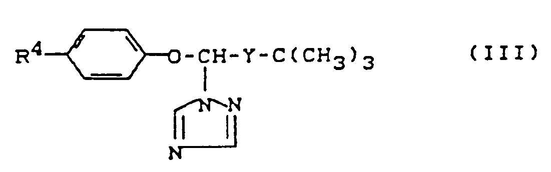 in which
a)
Y represents -CH(OH) and
R⁴ represents chlorine or phenyl,
or
b)
Y represents CO and
R⁴ represents chlorine,
and/or
at least one azole derivative of the formula 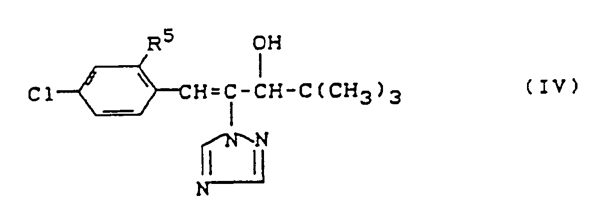 in which
R⁵ represents hydrogen or chlorine,
and/or
1-[(bis-(4-fluorophenyl)-methylsilyl)-methyl]-1H-1,2,4-triazole of the formula 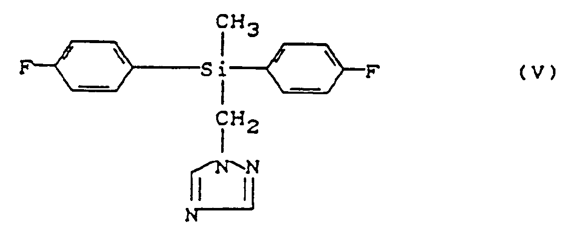 and
B) if desired, one or more other active compounds and additives
for prevention of crystallization of active compounds of the formulae (II) to (V).

2. Use according to Claim 1, characterized in that an alkylcarboxylic acid dimethylamide mixture is employed which on average consists to
5% of hexanecarboxylic acid dimethylamide,
50% of octanecarboxylic acid dimethylamide,
40% of decanecarboxylic acid dimethylamide and
5% of dodecanecarboxylic acid dimethylamide.

3. Process for prevention of crystallization of active compounds of the formulae (II) to (V) according to Claim 1 during application of aqueous spray liquors which contain at least one active compound of the formulae (II) to (V), characterized in that at least one alkylcarboxylic acid dimethylamide of the formula (I) according to Claim 1 is added to the spray liquors.

## Revendications

1. Utilisation de diméthylamides d'acides alkylcarboxyliques répondant à la formule 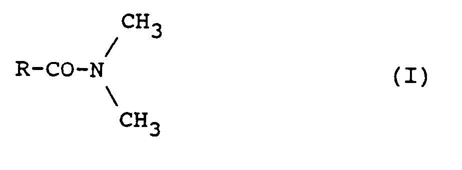 dans laquelle
R représente un groupe alkyle contenant de 5 à 19 atomes de carbone,
lors de l'épandage de bouillons aqueux de pulvérisation qui contiennent
A) au moins un dérivé d'azole de formule 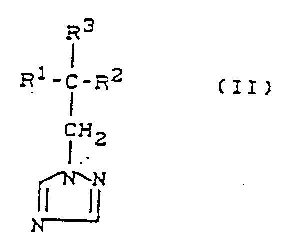 dans laquelle
a)
R¹ représente 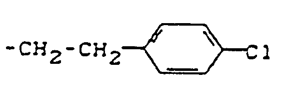
R² représente un groupe tert.-butyle et
R³ représente un groupe hydroxyle,
ou
b)
R¹ représente un groupe 4-fluorophényle,
R² représente un groupe 2-fluorophényle et
R³ représente un groupe hydroxyle,
ou
c)
R¹ représente un groupe 2,4-dichlorophényle,
R² représente un groupe n-butyle et
R³ représente un groupe hydroxyle,
ou
d)
R¹ représente 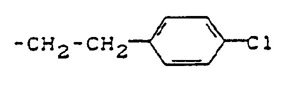
R² représente un groupe phényle et
R³ représente un groupe cyano
ou
e)
R¹ représente un groupe 2-chlorobenzyle,
R² représente un groupe 1-chlorocycloprop-1-yle
et
R³ représente un groupe hydroxyle,
ou
f)
R¹ représente un groupe 4-chlorophényle,
R² représente 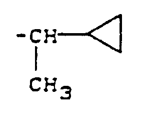 et
R³ représente un groupe hydroxyle,
et/ou
au moins un dérivé d'azole de formule 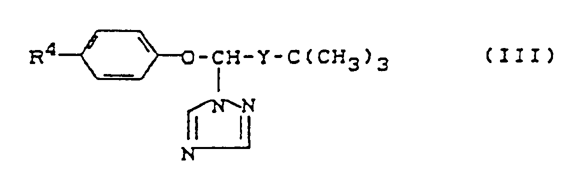 dans laquelle
a)
Y représente -CH(OH) et
R⁴ représente un atome de chlore ou un groupe phényle,
ou
b)
Y représente CO et
R⁴ représente un atome de chlore,
et/ou
au moins un dérivé d'azole de formule 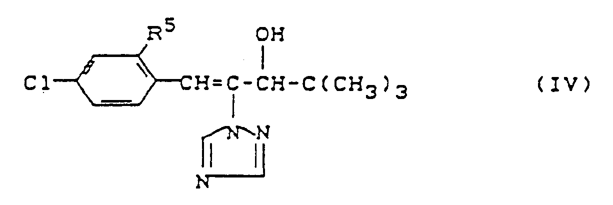 dans laquelle
R⁵ représente un atome d'hydrogène ou un atome de chlore,
et/ou
le 1-[(bis-(4-fluorophényl)-méthylsilyl)-méthyl]-1H-1,2,4-triazole répondant à la formule 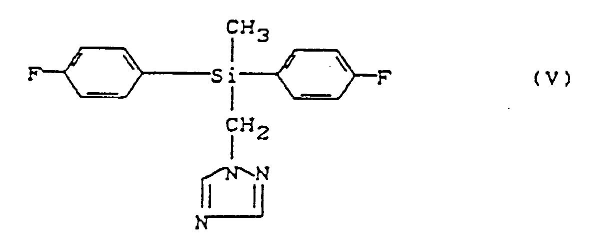 et
B) éventuellement, une ou plusieurs autres substances actives, ainsi que des additifs, pour empêcher la cristallisation de substances actives répondant aux formules (II) à (V).

2. Utilisation selon la revendication 1, caractérisée en ce qu'on met en oeuvre un mélange de diméthylamides d'acides alkylcarboxyliques, qui est constitué en moyenne à raison de :
5% de diméthylamide d'acide hexane-carboxylique,
50% de diméthylamide d'acide octane-carboxylique,
40% de diméthylamide d'acide décane-carboxylique et
5% de diméthylamide d'acide dodécane-carboxylique.

3. Procédé pour empêcher la cristallisation de substances actives répondant aux formules (II) à (V) selon la revendication 1, lors de l'épandage de bouillons aqueux de pulvérisation, qui contiennent au moins une substance active des formules (II) à (V), caractérisé en ce qu'on ajoute aux bouillons de pulvérisation au moins un diméthylamide d'acide alkylcarboxylique de formule (I) selon la revendication 1.
